# EUROPEAN PATENT SPECIFICATION

(11) **EP 2 671 003 B1**
(45) Date of publication and mention of the grant of the patent: **01.10.2014**
(21) Application number: 11702199.8
(22) Date of filing: 03.02.2011
(51) Int. Cl.: F16H 61/34, F16H 63/20, F16H 63/30

(54) **GEAR SHIFT DEVICE FOR COUPLING TO A GEAR BOX**
SCHALTEINRICHTUNG ZUR KOLLPUNG AN EIN SCHALTGETRIEBE
DISPOSITIF DE COMMANDE POUR COUPLAGE À UNE BOÎTE DE VITESSES

(43) Date of publication of application: 11.12.2013
(73) Proprietor: Kongsberg Automotive As, 3601 Kongsberg (NO)
(72) Inventor: BJOERKGARD, Sven, N-3610 Kongsberg (NO); NORHEIM, Daniel, N-3612 Kongsberg (NO)
(74) Representative: UEXKÜLL & STOLBERG
(86) International application number: PCT/EP2011/051561
(87) International publication number: WO 2012/103948

(56) References cited:
- EP-A1- 0 488 857
- EP-A2- 1 790 879
- DE-A1-102007 045 672

## Description

The present invention relates to a gear shift device for a gear box comprising a housing, a shift axle defining an axle axis, the shift axle being axially movable and pivotable with respect to the axle axis relative to the housing and comprising first and second ends, a first lever pivotably mounted on the housing and coupled with the shift axle for pivoting thereof, a second lever having a first arm member, the second lever being pivotably supported on the housing with respect to a lever axis that extends transversely to the axle axis, wherein the free end of the first arm member engages with the shift axle so as to axially move the shift axle upon a pivotal movement of the second lever.

Gear shift devices are part of or being coupled to gear boxes of vehicles and transfer the motion of a shifting member such as a gear shift lever which is actuated by a user, into a motion of the fork shafts in the gear box to activate and deactivate the respective gears. For moving the fork shafts a select shaft is provided which is axially movable and pivotable and comprises levers which may engage with a single fork shaft depending on the axial position of the select shaft and push or pull it upon a pivotal movement of the select shaft.

For example EP 1 790 879 A2 which is considered the closest prior art, discloses a gear shift device in which a shift axle being part of the device is formed in one piece with the select shaft from which the levers for actuating the fork shafts radially extend. At the free of the shift axle a first lever is fixedly connected so that the shift axle may be pivoted by actuating the first lever. Moreover, the device comprises a second lever which is pivotably mounted in the housing so that it may pivot with respect to an axis that is arranged transversely to the axis of the shift axle. The second lever has first and second arm members which extend from the pivot axis and are rigidly coupled with each other, wherein the free end of the first arm member engages with the shift axle. Thus, pivoting of the second lever effects an axial movement of the shift axle.

This prior art device suffers from the following drawbacks. Firstly, the free end of the first lever must slidingly be coupled with the corresponding actuator for pivoting the shift axle, as the entire axle is axially moved upon actuation of the second lever, so that friction is generated at the coupling between the actuator and the first lever.

Secondly, the first lever must pivot in a plane that is perpendicular to the longitudinal axis of shift axle and the select shaft, respectively. Thus, is not possible to choose a geometry in which the actuator for the first lever is mounted such that the moving element of that actuator does not move in a plane perpendicular to the shift axle. However, in view of the limited space in a vehicle such flexibility would be helpful because this would allow to employ very similar shift devices in a plurality of different vehicle types wherein it would only be required to modify the housing for the different types to take into account the different geometrical requirements.

Moreover, from EP 0 488 857 B1 a gear shift device is known in which a yoke portion is arranged at the free end of a lever fixedly coupled with the select shaft wherein a roller bearing may slide within the yoke portion, the roller bearing being supported on the free end of a further lever coupled with an actuating shaft that extends essentially perpendicular to the select shaft. As the roller bearing contacts each arm of the yoke portion in essentially only single point, the bearing transfers merely a linear force on the yoke portion which leads to a pivotal movement of the select shaft due to the lever mounted thereon. Thus, not at least due to the lever carrying the yoke portion this configuration is rather space consuming and requires that the actuating shaft is essentially perpendicular to the select shaft.

Therefore, it is the object of the present invention to provide a less space consuming gear shift device which can easily be adapted to different geometries without modifying the moveable elements wherein the friction inside the device is still minimized and kept on a low level.

This object is achieved by a gear shift device in which the first end of the shift axle comprises a yoke portion having first and second arms extending parallel to the axle axis with first and second abutment surfaces which are parallel to and face each other and pointing towards the axle axis, wherein the axle axis is centered between the first and the second abutment surfaces, wherein a roller is provided between the first and second abutment surfaces, the roller having a rotational axis and being configured such that it abuts on either abutment surface at at least two points spaced in the direction of rotational axis of the roller, wherein an actuating shaft is provided that defines a shaft axis and is supported axially fixed but pivotably with respect to the shaft axis on the housing and comprises first an second ends, the first end being rigidly connected to the first lever and the second end rotatingly supporting the roller such that in any rotational position of the actuating shaft the rotational axis of the roller intersects the axle axis.

Due to the combination of the yoke portion with the roller located between the arms with the roller axis intersecting the axle axis, it is on the one hand possible to transfer torque from the actuating shaft to the shift axle in a manner which requires only a small space around the shift axle, as the roller contacts the abutment surfaces at at least two points and the yoke portion is arranged around the axle axis rather than being offset thereto.

On the other hand this arrangement allows for a configuration in which the actuating shaft is no longer necessarily in line with the axle axis so that the first lever may pivot in a plane that is not perpendicular to the axle axis. For adapting the design of the present invention to special geometric requirements, it is only necessary that the housing is configured correspondingly. However, it not required to modify the shift axle or any other moving part of the device.

Nevertheless, the friction in the system is kept very low as an axial movement of the shift axle only requires that the roller is moving between the arms of the yoke section in the longitudinal direction of the shift axle which generates a minimum amount of friction.

In this regard, it will be appreciated that an abutment on either abutment surface does mean that there is a frictional grip which would prevent the roller from sliding along the abutment surfaces. In particular, it is preferred that the distance between the abutment surfaces is slightly larger than the diameter of the roller, so that there is a little play between the roller and the abutment surfaces.

In a preferred embodiment the roller comprises two bearings which are supported at the second end of the actuating shaft, preferably by a support axle extending through a receiving bore in the second end. In this design the two separated points at which the roller abuts on the abutment surfaces of the yoke portion, are formed by the outer periphery of the bearings. Due to the bearings the friction in the entire system is further minimized. Finally, this design allows connecting the roller in an easy manner with the actuating shaft.

In a further preferred embodiment the bearings are separated by the actuating shaft. In this case it is ensured that the two abutment points are separated by a sufficient distance so that the torque required for pivoting the axle shaft and the select shaft, respectively, can safely be transferred from the actuating shaft to the shift axle via the roller and the yoke portion.

Furthermore, it is preferred that the shaft axis of the actuating shaft is angled with respect to the axle axis, so that a situation is realized in which the first lever does not pivot in a plane perpendicular to the axle axis. Such a configuration allow for a flexible installation of the gear shift device on the gear box in a vehicle.

Moreover, in a preferred embodiment the housing comprises a bushing which supports the shift axle. In particular, the second end of the shift axle may be supported by the bushing. When such a configuration is used, the shift axle is guided in a sufficiently stable manner with only a small amount of friction both during pivoting and axial movement.

Furthermore, it is preferred that the housing comprises a flange portion for a connection with a flange on a gear box, wherein the second end of the shift axle is provided with a coupling portion which is configured such that a select shaft protruding from the gear box, may be coupled with the coupling portion in an axially and rotatably fixed manner. In this case the gear shift device is formed as a separate element which can easily be mounted on a gear box by coupling the flange portion with a corresponding flange around the select shaft on the gear box wherein it is only necessary to fixedly couple the shift axle and the select shaft. Thus, the gear shift device is formed as a module to be mounted on a gear box wherein only the housing of this module has to adapted to the respective geometrical requirements.

Finally, in this embodiment it is preferred that the bushing is fixed to the flange portion, wherein the shift axle is rotatably and axially movably supported in the bushing. This allows to also to guide the select shaft in the bushing.

In the following two embodiments of a gear shift device according to the present invention will be described by way of example with reference to the accompanying drawings in which:
- Fig. 1: shows a cross sectional view of a first embodiment of a gear shift device and
- Fig. 2: shows a second cross sectional view.

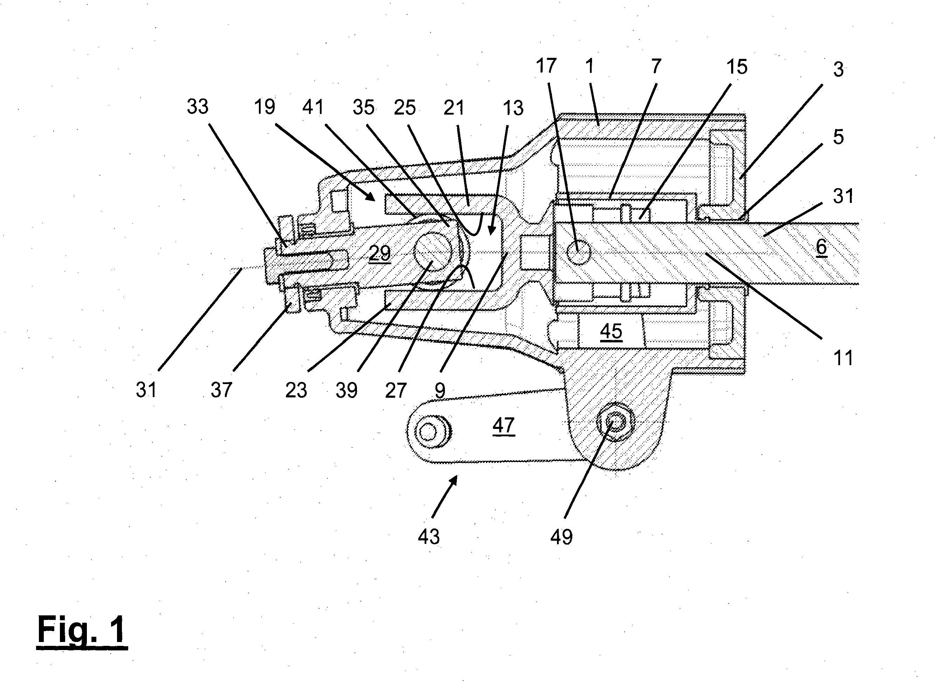

The first embodiment of a gear shift device according to the present invention shown in Figure 1 comprises a housing 1 which is provided with a flange portion 3 at one end thereof so that the entire housing 1 may be coupled to a flange on a gear box (not shown) via the flange portion 3. For this purpose, the flange portion 3 comprises an opening 5 through which the select shaft 6 of the gear box may protrude into the housing 1.

Further, in the opening 5 in the flange portion 3 a bushing 7 is supported which acts as a guide element for both the select shaft 6 and a shift axle 9. The shift axle 9 defines an axle axis 11 which extends along the longitudinal direction of the shift axle 9, and comprises first and second ends 13, 15, the second end 15 pointing towards the opening 5 in the flange portion 3. The bushing 7 supports the shift axle 9 in such a manner that it is axially movable, i.e. parallel to the axle axis 11, and rotatable in the housing 1. In addition, the shift axle 9 comprises coupling means at the second end 15 in the form of a through bore 17 which extends perpendicularly to the axle axis 11, so that the select shaft 6 may be connected with the shift axle 9 in an axially and rotatably fixed manner via a bolt.

The first end 13 of the shift axle 9 is provided with a yoke portion 19 comprising first and second arms 21, 23 which extend parallel to each other and to the axle axis 11. The first and second arms 21, 23 are provided with first and second abutment surfaces 25, 27 which are parallel to and face each other and either of which points to the axle axis 11.

Further the yoke portion 19 is dimensioned such that the abutment surfaces 25, 27 are centered with respect to the axle axis 11, i.e. the distance between an abutment surface 25, 27 and the axle axis 11 is the same for either abutment surface 25, 27.

Moreover, an additional actuating shaft 29 which defines a shaft axis 31, is supported in a pivotable but axially fixed manner in the housing 1, wherein in this preferred embodiment the shaft axis 31 is angled with respect to the axle axis 11. The actuating shaft 29 comprises first and second ends 33, 35 wherein a first lever 37 is fixedly mounted on the first end 33 outside the housing so that it extends perpendicular to the shaft axis 31. Since the shaft axis 31 is angled with respect to the axle axis 11, the first lever 37 may pivot in plane that is not perpendicular to the axle axis 11, when the actuating shaft 29 is to be pivoted.

The actuating shaft 29 carries a support axle 39 which extends through a receiving bore in the second end 35 thereof. On either side of the actuating shaft 29 a roller bearing 41 is mounted on that support axle 39, so that the actuating shaft 29 is sandwiched between the bearings 41, i.e. the bearings 41 are separated by the actuating shaft 29, wherein the bearings 41 form a roller with a rotational axis being parallel to the longitudinal axis of the support axle 39.

The actuating shaft 29 is rotatingly supported in the housing in such a way, that the support axle 39, i.e. the rotational axis of the bearings 41 forming the roller, in any rotational position of the actuating shaft 29 intersects the axle axis 11.

The outer diameter of the bearings 41 is chosen such that either bearing 41 abuts on the first and second abutment surfaces 25, 27, so that the roller formed by the bearings 41 abuts on each abutment surface 25, 27 in at least two points which are spaced in the direction of the rotational axis of the roller. In this embodiment the two points are formed on the periphery of the two separated bearings 41. This means that the outer diameter of the bearings 41 corresponds to the distance between the first and second arms 21, 23. However, a frictional grip between the bearings 41 and the abutment surfaces 25, 27 is avoided. Instead, there is little play between the bearings 41 and the abutment surfaces 25, 27.

Finally, a second lever 43 is pivotably mounted on the housing 1, wherein the second lever 43 comprises a first arm member 45 the free end of which engages with the shift axle 9. Further, the second lever 43 also comprises a second arm member 47 which is rigidly coupled with the first arm member 45 and arranged outside the housing 1. The pivot axis 49 of the second lever 43 extends transversely, and in the preferred embodiment shown here perpendicularly, to the axle axis 11, so that when the second arm member 47 is pulled or push and the second lever 43 is pivoted, an axial movement of the shift axle 9 is effected due to the engagement between the free end of the first arm member 45 and the shift axle 9.

When being coupled with a gear box wherein the shift axle 9 is connected with the select shaft 6, the gear shift device as described before is working as follows.

For pivoting the shift axle 9 and the select shaft 6, respectively, the first lever 37 must be pushed or pulled. This effects a pivotal movement of the actuating shaft 29, and the bearings 41 which abut on the arms 21, 23 of the yoke portion 19 on two points spaced in the direction of the support axle 39, directly transfer torque to the shift axle 9 rather than merely a linear force.

Further, due to the fact that the actuating shaft 29 may be angled with respect to the shift axle 9, the design of the present invention allows to adapt the angular position of the plane in which the first lever 37 pivots, only by modifying the housing 1 depending on the geometrical requirements. It is not necessary to make further significant changes in the concept for the moving parts in the device.

In order to axially move the shift axle 9 and the select shaft the second arm member 47 of the second lever 43 is actuated. Since the rotational axis of the roller formed by the bearings intersects the axle axis 11, the roller slides along the abutment surfaces 25, 27 of the yoke portion 19 with a minimum of friction when the shift axle 9 is axially moved.

For adapting the position of the plane in which the second arm member 47 pivots, to special requirements, it is only required to modify the flange portion 3 so that the housing 1 assumes the correct rotational position when being mounted on a gear box.

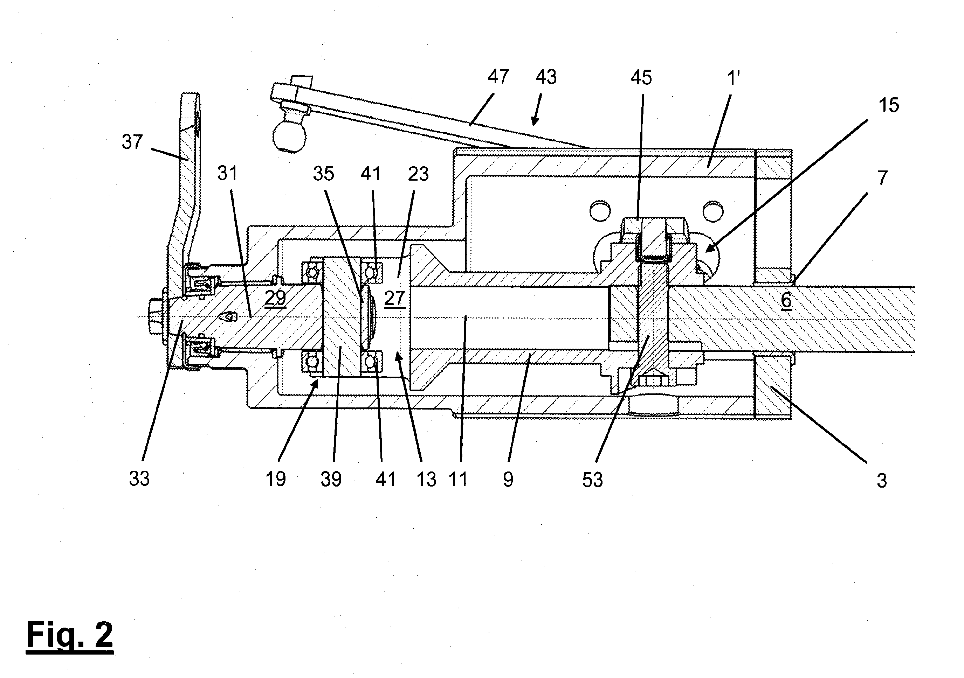

Fig. 2 shows a second embodiment of a device according to the present invention. In this embodiment a select shaft 6 protruding from the gear box (not shown) into the housing 1', is coupled with the shift axle 9 via a bolt 53 which extends through a bore in the free end of the select shaft 6.

In this embodiment the select shaft 6 is supported by a bushing 7 in the flange portion 3 rather than the shift axle 9. However, the device according to the second embodiment functions in the same manner as the first embodiment.

In conclusion, the present invention provides for a flexible concept of a gear shift device which can easily be adapted to special geometrical requirements without making significant changes to the moving elements in the device. In principle, it is only necessary to modify the housing 1, 1' so that the actuating shaft 29 is aligned in the desired manner. Nevertheless, the fact that also the plane in which the first lever 37 pivots, is adjustable does not lead to a significant increase of friction in the device when a shift operation is performed, as the roller can smoothly slide in the yoke portion 19.

## Claims

1. Gear shift device for a gear box comprising:
a housing (1, 1'),
a shift axle (9) defining an axle axis (11), the shift axle (9) being axially movable and pivotable with respect to the axle axis (11) relative to the housing (1, 1') and comprising first and second ends (13, 15),
a first lever (37) pivotably mounted on the housing (1, 1') and coupled with the shift axle (9) for pivoting thereof,
a second lever (43) having a first arm member (45), the second lever being pivotably supported on the housing (1, 1') with respect to a lever axis (49) that extends transversely to the axle axis (11), wherein the free end of the first arm member (45) engages with the shift axle (9) so as to axially move the shift axle (9) upon a pivotal movement of the second lever (43),
**characterized in that**
the first end (13) of the shift axle (9) comprises a yoke portion (19) having first and second arms (21, 23) extending parallel to the axle axis (11) with first and second abutment surfaces (25, 27) which are parallel to and face each other and pointing towards the axle axis (11), wherein the axle axis (11) is centered between the first and the second abutment surfaces (25, 27),
a roller (41) is provided between the first and second abutment surfaces (25, 27), the roller having a rotational axis and being configured such that it abuts on either abutment surface (25, 27) at at least two points spaced in the direction of rotational axis of the roller (41),
an actuating shaft (29) is provided that defines a shaft axis (31) and is supported axially fixed but pivotably with respect to the shaft axis (11) on the housing (1, 1') and comprises first an second ends (33, 35),
the first end (33) being rigidly connected to the first lever (37) and
the second end (35) rotatingly supporting the roller (41) such that in any rotational position of the actuating shaft (29) the rotational axis of the roller (41) intersects the axle axis (11).

2. Device according to Claim 1, **characterized in that** the roller (41) comprises two bearings (41) supported by the second end (35) of the actuating shaft (29).

3. Device according to Claim 2, **characterized in that** the bearings (41) are supported by a support axle (39) which extends through a receiving bore in the second end (35) of the actuating shaft (31).

4. Device according to Claim 2 or 3, **characterized in that** the bearings (41) are separated by the actuating shaft (29) .

5. Device according to any of Claims 1 to 4, **characterized in that** the shaft axis (31) is angled with respect to the axle axis (11).

6. Device according to any of Claims 1 to 5, **characterized in that** the housing (1, 1') comprises a bushing (7) which supports the shift axle (9).

7. Device according to any of Claims 1 to 6, **characterized in that** the housing (1, 1') comprises a flange portion (3) for a connection with a flange on a gear box,
wherein the second end (15) of the shift axle (9) is provided with a coupling portion which is configured such that a select shaft (6) protruding from the gear box, may be coupled with the coupling portion in an axially and rotatably fixed manner.

8. Device according to Claims 6 and 7, **characterized in that** the bushing (7) is fixed to the flange portion (3), wherein the shift axle (9) is rotatably and axially movably supported in the bushing (7).

## Patentansprüche

1. Gangschaltvorrichtung für ein Getriebe mit:
einem Gehäuse (1, 1`),
einer Schaltwelle (9), die eine Wellenachse (11) definiert, wobei die Schaltwelle (9) axial beweglich und drehbar in Bezug auf die Wellenachse (11) relativ zu dem Gehäuse (1, 1') ist und erste und zweite Enden (13, 15) aufweist,
einem ersten Hebel (37), der schwenkbar an dem Gehäuse (1, 1`) angebracht und mit der Schaltwelle (9) zum Drehen derselben gekoppelt ist,
einem zweiten Hebel (43) mit einem ersten Armteil (45), wobei der zweite Hebel schwenkbar an dem Gehäuse (1, 1') in Bezug auf eine Hebelachse (49) gelagert ist, die sich quer zu der Wellenachse (11) erstreckt, wobei das freie Ende des ersten Armteils (45) mit der Schaltwelle (9) eingreift, um so auf eine Schwenkbewegung des zweiten Hebels (43) hin die Schaltwelle (9) axial zu bewegen,
**dadurch gekennzeichnet, dass**
das erste Ende (13) der Schaltwelle (9) einen Gabelabschnitt (19) aufweist, der erste und zweite Arme (21, 23) hat, die parallel zu der Wellenachse (11) mit ersten und zweiten Anlageflächen (25, 27) verlaufen, die parallel zueinander und einander zugewandt sind und auf die Wellenachse (11) gerichtet sind, wobei die Wellenachse (11) zwischen den ersten und zweiten Anlageflächen (25, 27) zentriert ist,
eine Walze (41) zwischen den ersten und zweiten Anlageflächen (25, 27) vorgesehen ist, wobei die Walze eine Drehachse hat und so ausgestaltet ist, dass sie an jeder Anlagefläche (25, 27) an wenigstens zwei Punkten anliegt, die in Richtung der Drehachse der Walze (41) auf Abstand zueinander sind,
eine Betätigungswelle (29) vorgesehen ist, die eine Betätigungswellenachse (31) definiert und die axial fixiert, aber drehbar in Bezug auf die Wellenachse (11) an dem Gehäuse gelagert ist und erste und zweite Enden (33, 35) aufweist,
wobei das erste Ende (33) fest mit dem ersten Hebel (37) verbunden ist und
das zweite Ende die Walze (41) drehbar trägt, so dass in jeder Drehstellung der Betätigungswelle (29) die Drehachse der Walze (41) die Wellenachse (11) schneidet.

2. Vorrichtung nach Anspruch 1, **dadurch gekennzeichnet, dass** die Walze (41) zwei Lager (41) aufweist, die von dem zweiten Ende (35) der Betätigungswelle (29) getragen werden.

3. Vorrichtung nach Anspruch 2, **dadurch gekennzeichnet, dass** die Lager (41) von einer Trägerwelle (39) getragen werden, die durch eine Aufnahmebohrung in dem zweiten Ende (35) der Betätigungswelle (31) verläuft.

4. Vorrichtung nach Anspruch 2 oder 3, **dadurch gekennzeichnet, dass** die Lager (41) von der Betätigungswelle (29) getrennt sind.

5. Vorrichtung nach einem der Ansprüche 1 bis 4, **dadurch gekennzeichnet, dass** die Betätigungswellenachse (31) in Bezug auf die Wellenachse (11) abgewinkelt ist.

6. Vorrichtung nach einem der Ansprüche 1 bis 5, **dadurch gekennzeichnet, dass** das Gehäuse (1, 1`) eine Buchse (7) aufweist, die die Schaltwelle (9) lagert.

7. Vorrichtung nach einem der Ansprüche 1 bis 6, **dadurch gekennzeichnet, dass** das Gehäuse (1, 1') einen Flanschabschnitt (3) zur Verbindung mit einem Flansch an einem Getriebe aufweist,
wobei das zweite Ende (15) der Schaltwelle (9) mit einem Kopplungsabschnitt versehen ist, der dazu ausgestaltet ist, so dass eine Wählwelle (6), die von dem Getriebe vorsteht, mit dem Kopplungsabschnitt in einer in axialer Richtung und in Drehrichtung fixierten Weise gekoppelt werden kann.

8. Vorrichtung nach Anspruch 6 und 7, **dadurch gekennzeichnet, dass** die Buchse (7) an dem Flanschbereich (3) befestigt ist, wobei die Schaltwelle (9) drehbar und axial beweglich in der Buchse (7) gelagert ist.

## Revendications

1. Dispositif de changement de vitesses pour une boîte de vitesses, comprenant :
un boîtier (1, 1'),
un axe de changement (9) définissant un axe géométrique (11), l'axe de changement (9) étant mobile axialement et capable de pivoter par rapport à l'axe géométrique (11) par rapport au boîtier (1, 1') et comprenant une première et une seconde extrémité (13, car),
un premier levier (37) monte en pivotement sur le boîtier (1, 1') et couplé à l'axe de changement (9) pour faire pivoter celui-ci,
un second levier (43) ayant un premier élément de bras (45), le second levier étant supporté en pivotement sur le boîtier (1, 1') par rapport à un axe de levier (49) qui s'étend transversalement à l'axe géométrique (11), dans lequel l'extrémité libre du premier élément de bras (45) est en engagement avec l'axe de changement (9) de manière à déplacer axialement l'axe de changement (9) lors d'un mouvement de pivotement du second levier (43),
**caractérisé en ce que**
la première extrémité (13) de l'axe de changement (9) comprend une portion en étrier (19) ayant un premier et un second bras (21, 23) s'étendant parallèlement à l'axe géométrique (11), avec une première et une seconde surface de butée (25, 27) qui sont parallèles et mutuellement face à face et pointant vers l'axe géométrique (11), dans lequel l'axe géométrique (11) est centré entre la première et la seconde surface de butée (25, 27),
un rouleau (41) est prévu entre la première et la seconde surface de butée (25, 27), le rouleau ayant un axe de rotation et étant configuré de telle façon qu'il vient buter sur l'une ou l'autre des surfaces de butée (25, 27) en au moins deux points espacés dans la direction de l'axe de rotation du rouleau (41),
il est prévu un arbre d'actionnement (29) qui définit un axe d'arbre (31) et qui est supporté axialement fixe mais capable de pivoter par rapport à l'axe de l'arbre (11) sur le boîtier (1, 1') et comprend une première et une seconde extrémité (33, 35),
la première extrémité (33) est connectée rigidement au premier levier (37), et
la seconde extrémité (35) supporte en rotation le rouleau (41) de telle façon que dans toute position de rotation de l'arbre d'actionnement (29) l'axe de rotation du rouleau (41) recoupe l'axe géométrique (11).

2. Dispositif selon la revendication 1, **caractérisé en ce que** le rouleau (41) comprend deux paliers (41) supportés par la seconde extrémité (35) de l'arbre d'actionnement (29).

3. Dispositif selon la revendication 2, **caractérisé en ce que** les paliers (41) sont supportés par un axe de support (39) qui s'étend à travers un trou de réception dans la seconde extrémité (35) de l'arbre d'actionnement (31).

4. Dispositif selon la revendication 2 ou 3, **caractérisé en ce que** les paliers (41) sont séparés par l'arbre d'actionnement (29).

5. Dispositif selon l'une quelconque des revendications 1 à 4, **caractérisé en ce que** l'axe de l'arbre (31) forme un angle par rapport à l'axe géométrique (11).

6. Dispositif selon l'une quelconque des revendications 1 à 5, **caractérisé en ce que** le boîtier (1, 1') comprend une douille (7) qui supporte l'axe de changement (9).

7. Dispositif selon l'une quelconque des revendications 1 à 6, **caractérisé en ce que** le boîtier (1, 1') comprend une portion en forme de bride (3) pour une connexion avec une bride sur une boîte de vitesses,
dans lequel la seconde extrémité (15) de l'axe de changement (9) est dotée d'une portion de couplage qui est configurée de telle façon qu'un arbre de sélection (6), qui se projette depuis la boîte de vitesses, peut être couplé avec la portion de couplage d'une manière fixe axialement et en rotation.

8. Dispositif selon les revendications 6 et 7, **caractérisé en ce que** la douille (7) est fixée à la portion en forme de bride (3), et **en ce que** l'axe de changement (9) est supporté de façon mobile en rotation et axialement dans la douille (7).
